# EUROPÄISCHE PATENTSCHRIFT

(11) **EP 1 524 135 B1**
(45) Veröffentlichungstag und Bekanntmachung des Hinweises auf die Patenterteilung: **25.01.2012**
(21) Anmeldenummer: 04450191.4
(22) Anmeldetag: 13.10.2004
(51) Int. Cl.: B60D 1/02

(54) **Kupplung**
Coupling
Attelage

(30) Priorität: 13.10.2003 AT 16102003; 07.11.2003 AT 17912003
(43) Veröffentlichungstag der Anmeldung: 20.04.2005
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- DE-A- 1 580 618
- DE-A- 3 340 344
- DE-A- 3 918 611
- DE-U- 20 002 819
- FR-A- 2 740 734
- GB-A- 2 042 449

## Beschreibung

Die Erfindung betrifft eine Kupplung mit einem Kupplungsmaul und einem Kupplungszapfen, wobei der Kupplungszapfen mittels eines Kupplungsautomaten betätigbar ist, wobei - in Gebrauchslage gesehen - an der Oberseite eines Aufnahmeraumes des Kupplungsmauls und/oder an der Unterseite des Aufnahmeraumes eine, vorzugsweise pilzförmige, Sattelbuchse zum Anpassen des Kupplungsmauls und des Aufnahmeraumes an verschiedene Größen von Zugösen sowie an unterschiedlich hohe Zugösen derart angeordnet ist, dass durch die Anpassung der Größe des Aufnahmeraumes an verschiedene Größen von Zugösen sowie an unterschiedlich hohe Zugösen, die Zuverlässigkeit, dass die Zugöse bei der Auslösung des Kupplungsautomaten in der Sollposition ist, hoch ist, wobei die Sattelbuchse lösbar mit dem Kupplungsmaul verbunden ist und zumindest teilweise in den Aufnahmeraum ragt.

Bekannte derartige Kupplungen weisen im Aufnahmeraum des Kupplungsmaules eine Auslösezunge auf. Wird eine Zugöse in den Aufnahmeraum gebracht, so wird die Auslösezunge bewegt und der Kupplungszapfen, welcher üblicherweise von einer Feder vorgespannt ist, freigegeben. Nachteilig dabei ist, dass die Kupplungen für eine Dimension der Zugöse ausgelegt sind und nur mit derartigen Zugösen ein zuverlässiger Kuppelvorgang erreicht wird.

Die DE 39 18 611 A1 zeigt ein vertikal verschiebbares Spielbegrenzungselement und offenbart lediglich die Merkmale des Oberbegriffs des Anspruchs 1.

Aufgabe der Erfindung ist es, eine Kupplung der eingangs genannten Art anzugeben, bei der die bekannten Nachteile vermieden werden, bei der ein zuverlässiger Kuppelvorgang auch bei verschiedenen Größen von Zugösen erreicht werden kann und die eine hohe Lebensdauer aufweist.

Erfindungsgemäß wird dies dadurch erreicht, dass die Sattelbuchse Noppen aufweist und in einer ersten Position und einer zweiten Position verrastbar ist, wobei die Noppen in der ersten Position mit einer ersten Gruppe von Vertiefungen und in der zweiten Position mit einer zweiten Gruppe von Vertiefungen in Eingriff sind.

Durch die erfindungsgemäße Sattelbuchse können Schläge einer Zugöse auf die Oberseite des Aufnahmeraumes eines Kupplungsmauls aufgenommen werden und beispielsweise durch Verformung abgebaut werden, wodurch die Beanspruchung des Kupplungsmauls gesenkt und die Lebensdauer des Kupplungsmauls erhöht wird. Bei einer Wartung und/oder Instandhaltung kann der Zustand der Sattelbuchse kontrolliert werden und diese gegebenenfalls einfach ausgewechselt werden. Weiters kann mit verschiedenen Größen von Sattelbuchsen die Größe des Aufnahmeraumes verändert werden und an verschiedene Größen von Zugösen adaptiert werden. Auf diese Weise kann mittels einer Sattelbuchse eine schnelle und einfache Adaptierung des Aufnahmeraumes für unterschiedliche Größen der Zugöse erreicht werden, wobei keine Teile ausgetauscht werden müssen. Ein Verbringen der Noppen von der ersten Position in die zweite Position kann beispielsweise durch ein Verdrehen der Sattelbuchse vorgesehen sein, wobei die Sattelbuchse seitliche Abflachungen für das Zusammenwirken mit einem Gabelschlüssel od. dgl. aufweisen kann.

In Weiterführung der Erfindung kann vorgesehen sein, dass der Kupplungszapfen in der Sattelbuchse geführt ist, wodurch weiters die Führung des Kupplungszapfens als Verschleißteil ausgebildet werden kann und durch die einstückige Ausgestaltung der Sattelbuchse und der Führung die erfindungsgemäße Kupplung besonders einfach und kostengünstig herstellbar ist.

Die Erfindung wird unter Bezugnahme auf die beigeschlossenen Zeichnungen näher beschrieben. Dabei zeigt:
Fig. 1 eine Schrägansicht einer Ausführungsform einer nicht erfindungsgemäßen Kupplung, teilweise im Schnitt;
Fig. 2 einen Schnitt durch das Zugmaul und das Konturanpassungselement der Kupplung gemäß Fig. 1;
Fig. 3 und 4 einen Schnitt durch eine Ausführungsform einer erfindungsgemäßen Kupplung (mit unterschiedlichen Stellungen des Kupplungszapfens) zusammen mit
Fig. 5 (Schrägansicht der Oberseite des Kupplungsmauls) und zusammen mit
Fig. 6 und 7 (jeweils eine Schrägansicht einer Sattelbuchse).

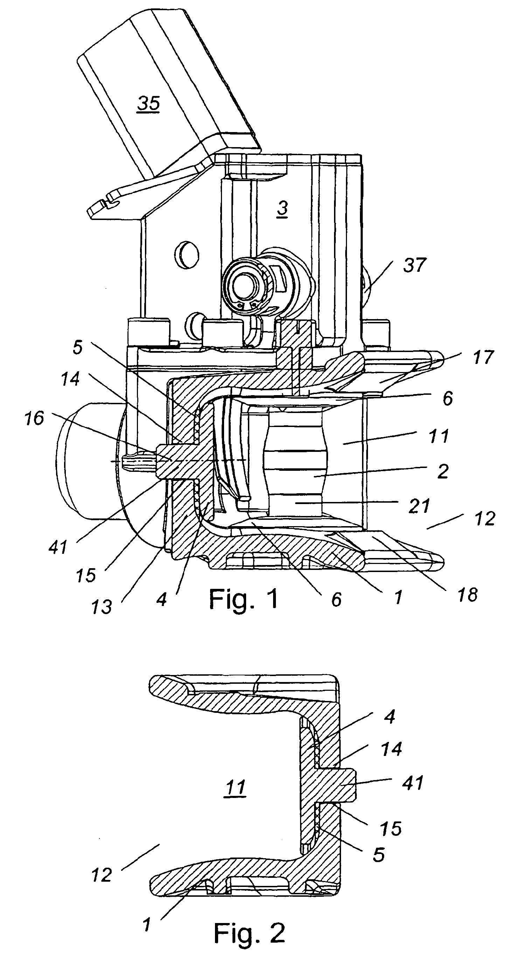

In Fig. 1 ist eine Ausführungsform einer Kupplung mit einem Kupplungsmaul 1 und einem Kupplungszapfen 2 dargestellt, wobei der Kupplungszapfen 2 mittels eines Kupplungsautomaten 3 betätigbar ist.

Bekannte derartige Kupplungen sind üblicherweise für eine bestimmte Größe von Zugösen ausgelegt. Werden andere Zugösen verwendet, so kann oftmals ein Kuppelvorgang mit dem Kupplungsautomaten nicht durchgeführt werden und/oder die Beweglichkeit der Zugöse im gekuppelten Zustand ist zu gering.

Bei der Kupplung gemäß Fig. 1 ist an der der Öffnung 12 des Kupplungsmauls 1 gegenüberliegenden Wandung 13 eine Befestigungseinrichtung 14 für ein Konturanpassungselement 4 vorgesehen, wobei das Konturanpassungselement 4 lösbar in dem Kupplungsmaul 1 befestigbar ist. Mit dem Konturanpassungselement 4 kann ein Aufnahmeraum 11 des Kupplungsmauls entsprechend der zu verwendenden Zugöse adaptiert werden, wobei bei kleineren Zugösen ein größeres Konturanpassungselement 4 und bei größeren Zugösen ein kleineres Konturanpassungselement 4 Verwendung finden kann. Es kann auch vorgesehen sein, dass die Kupplung für eine vorgebbare Größe von Zugösen ohne Konturanpassungselement 4 verwendet wird.

Das Konturanpassungselement 4 kann bei anderen Ausführungsformen der erfindungsgemäßen Kupplung auch verstellbar ausgebildet sein, wodurch der Aufnahmeraum 11 mit dem Konturanpassungselement 4 an verschiedene Größen von Zugösen angepasst werden kann, wobei das Konturanpassungselement 4 nicht ausgewechselt werden muss. Ein möglicher Verstellmechanismus kann analog dem bei einer Sattelbuchse 6 nachfolgend dargestellten Verstellmechanismus ausgebildet sein.

Beim Kuppelvorgang wird die Kupplung gegen eine Zugöse gebracht, bis die Zugöse in dem Aufnahmeraum 11 ansteht und eine Auslösezunge 37 des Kupplungsautomaten 3 den Kupplungszapfen 2 auslöst.

Bei der erfindungsgemäßen Kupplung ist dabei die Zugöse mit dem Konturanpassungselement 4 in Kontakt, welches die Aufprallenergie aufnimmt. Spannungsspitzen im Kupplungsmaul 1 selbst werden dabei vermieden, wodurch die Lebensdauer des Kupplungsmauls erheblich erhöht wird. Das Konturanpassungselement 4 kann als Verschleißteil ausgebildet sein und bei Bedarf, insbesondere bei einer Wartung und/oder Instandhaltung, ausgewechselt werden. Dadurch kann ein langer und wirtschaftlich günstiger Betrieb der Kupplung gewährleistet werden.

Zwischen dem Kontruanpasungselement 4 und dem Kupplungsmaul 1 kann ein Feder-Dämpferelement 5 angeordnet sein, wodurch eine besonders günstiger Abbau der Aufprallenergie erreicht wird. Weiters wird dabei die Gefahr verringert, dass sich die Kupplung und die Zugöse nach dem Aufprall sofort in entgegengesetzter Richtung voneinander entfernen, wodurch eine Fehlkupplung verursacht werden könnte, da sich die Öffnung der Zugöse nicht mehr in der Sollposition befindet, wenn der Kupplungsbolzen 2 auf die Zugöse trifft. Durch das Feder-Dämpferelement 5 kann der Aufprall einem plastischem Stoß angenähert werden, bei dem die Zugöse nach dem Aufprall relativ zur Kupplung in Ruhe ist.

Eine Anpassung des Aufnahmeraums 11 an verschiedene Zugösen kann auch durch die Verwendung verschiedener Feder-Dämpferelemente 5 erfolgen.

Eine einfache Befestigung des Konturanpassungselementes 4 mit dem Kupplungsmaul 1 wird erreicht, wenn die Befestigungseinrichtung 14 eine Befestigungsöffnung 15 umfasst. Ist die Achse 16 der Befestigungsöffnung 15 im wesentlichen normal zur Längsachse 21 des Kupplungszapfens 2 angeordnet, so kann die Energie des Aufpralls im wesentlichen über das Feder-Dämpferelement 5 an das Kupplungsmaul 1 übertragen werden. Eine mögliche Anordnung des Konturanpassungselementes 4 und des Feder-Dämpferelementes 5 in dem Kupplungsmaul 1 ist aus Fig. 2 ersichtlich.

Das Konturanpassungselement 4 weist einen Befestigungsfortsatz 41 auf, der gegengleich zur Befestigungsöffnung 15 ausgebildet ist. Weiters kann ein mit dem Befestigungsfortsatz 41 wirkendes Sicherungselement vorgesehen sein. Als Sicherungselement kann insbesondere ein Vorstecker, eine Mutter od. dgl. vorgesehen sein. Bei dieser Ausbildung kann das Sicherungselement in einfacher Weise an der Rückseite des Kupplungsmauls 1 und nicht im Aufnahmeraum 11 angeordnet werden, wodurch es von der Zugöse nicht beeinträchtigt und/oder beschädigt werden kann. Bei dieser Ausbildung kann ein einfacher und schneller Wechsel des Konturanpassungselementes 4 und/oder des Feder-Dämpferelementes 5 vorgesehen sein, wobei auch die Verwendung unterschiedlicher Größen von Konturanpassungselementen 4 und/oder Feder-Dämpferelementen 5 ermöglicht wird.

Durch geeignet Wahl des Konturanpassungselementes 4 und/oder des Feder-Dämpferelementes 5 kann erreicht werden, dass die Zugöse bei Auslösung des Kupplungsautomaten 3 mit ihrer Öffnung unter dem Kupplungszapfen 2 ist, sodass der Kupplungszapfen 2 von dem Kupplungsautomaten 3 durch die Öffnung der Zugöse hindurch gebracht werden kann und die Zugöse eingekuppelt wird. Bei einer ungenauen Positionierung der Zugöse stößt der Kupplungszapfen 2 auf den Rand der Öffnung der Zugöse und kann durch die Öffnung nicht hindurch geführt werden. Bei einer Bewegung des Zugfahrzeuges und/oder des Anhängers wird die Zugöse in dem Aufnahmeraum verschoben, wobei oftmals die Öffnung zumindest kurzzeitig in der Sollposition ist.

In Fig. 1 ist ersichtlich, dass das Konturanpassungselement 4 sich entlang der Wandung des Aufnahmeraumes 11 erstrecken kann. Dabei kann in der Mitte ein Spalt für die Auslösezunge 37 vorgesehen sein. Mit dem Konturanpassungselement 4 können insbesondere unterschiedliche Außendurchmesser der Zugöse ausgeglichen werden. Dabei kann sichergestellt werden, dass die Öffnung der Zugöse beim Kuppelvorgang so angeordnet ist, dass der Kupplungszapfen durch die Öffnung der Zugöse hindurchgeführt werden kann. Mit dem Konturanpassungselement 4 kann die Kupplung insbesondere an Zugösen mit unterschiedlichem Außendurchmesser angepasst werden. Weiters kann gegebenenfalls bei Verschleiß das Konturanpassungselementes 4 ausgetauscht werden und so die Kupplung in einen neuwertigen Zustand gebracht werden.

Neben der Wahl eines entsprechenden Konturanpassungselementes 4 und/oder Feder-Dämpferelementes 5, wodurch die Öffnung einer vorgegebenen Zugöse bei Kontakt mit dem Konturanpassungselement 4 in der Sollposition ist, kann die Zuverlässigkeit des Kuppelvorgang dadurch erhöht werden, dass ein Luftzylinder 35 vorgesehen ist, der auf den Kupplungszapfen 2 wirkt.

Steht der Kupplungszapfen 2 an der Zugöse an und wird die Zugöse im Aufnahmeraum verschoben, sodass die Öffnung unter dem Kupplungszapfen 2 zu liegen kommt, so wird durch die von dem Luftzylinder 35 beaufschlagte Kraft der Kupplungszapfen 2 durch die Öffnung der Zugöse gedrückt. Durch den von dem Kupplungszapfen 2 bis zur Zugöse zurückgelegten Weg wird die von der Feder bereitgestellte Kraft, sofern der Kupplungszapfen 2 mittels einer Feder vorgespannt ist, verringert, die oftmals nicht ausreichen ist, um einen sicheren und zuverlässigen Kuppelvorgang zu gewährleisten. Die meisten Zugösen weisen im Bereich der Öffnung eine sich in Richtung der Öffnung verringernde Wandstärke auf. Dabei wird die Zugöse durch die von dem Luftzylinder 35 beaufschlagte Kraft in ihre Sollposition verschoben.

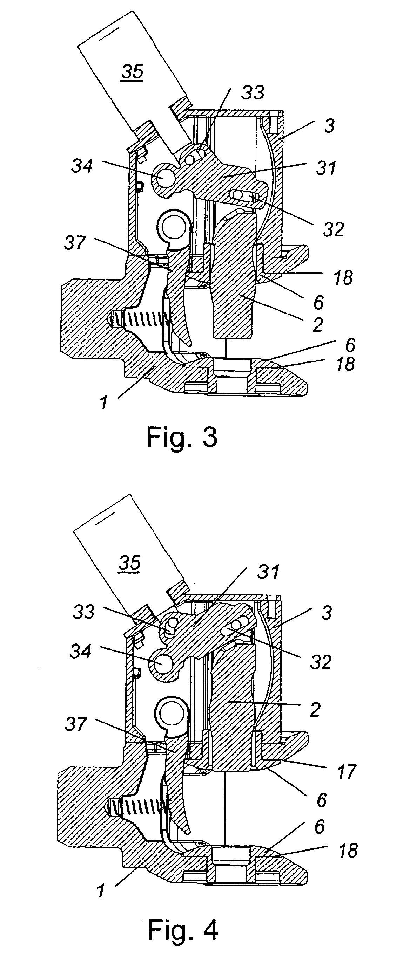

Der Kupplungsautomat 3 weist einen Mittelhebel 31 auf, wie aus den Fig. 3 und 4 ersichtlich ist, der mit dem Kupplungszapfen 2 verbunden ist. Es hat sich als vorteilhaft gezeigt, wenn der Luftzylinder 35 ebenfalls auf den Mittelhebel 31 wirkt, wodurch insbesondere die Anzahl der erforderlichen Teile gering gehalten werden kann und eine direkte Umsetzung der Kraft des Luftzylinders auf den Kupplungsbolzen 2 gegeben ist. Um eine translatorische Bewegung des Kupplungszapfens 2 und eine rotatorische Bewegung des Mittelhebels 31 um ein Lager 34 zu ermöglichen, kann der Mittelhebel 31 ein erstes Langloch 32 aufweisen, in das der Kupplungszapfen 2 eingreift.

Der Kupplungsautomat 3 kann ein mechanisch wirkender Kupplungsautomat 3 sein, wobei der Luftzylinder 35 lediglich unterstützende Wirkung hat, wodurch das sichere Verriegeln gewährleistet wird. Bei mechanischen Kupplungsautomaten 3 stellt der Mittelhebel 31 üblicherweise eine Sicherung gegen ungewolltes Öffnen der Kupplung bereit, indem der Kupplungszapfen 2 bei einer Bewegung in Richtung der offenen Position den Mittelhebel 31 gegen das Lager 34 drückt und eine Art Selbsthemmung auftritt. Dies ist insbesondere aus Fig. 3 ersichtlich. Somit stellt der Mittelhebel 31 eine Sicherung gegen ein unbeabsichtigtes Öffnen der Kupplung dar. Beim Kuppeln kann die Kraft für die Bewegung des Kupplungszapfens 2 im Wesentlichen von einer Feder aufgebracht werden, wobei der Luftzylinder 35 eine Unterstützungskraft bereitstellt. Dabei ist der Luftzylinder 35 vorzugsweise so dimensioniert, dass die Kupplung mittels eines Handhebels 36 betätigt werden kann.

Greift der Luftzylinder in ein zweites Langloch 33 des Mittelhebels 31 ein, so kann auch eine translatorische Bewegung des Luftzylinders 35 vorgesehen sein. Durch das unmittelbare Angreifen des Luftzylinders 35 auf den Mittelhebel 31 kann die Mechanik des Kupplungsautomaten 3 einfach ausgebildet sein und der Kupplungsautomat 3 und der Luftzylinder 35 eine schmale Bauform aufweisen, durch die eine hohe Zugänglichkeit zu dem Aufnahmeraum 11 und dem Kupplungsautomaten 3 sichergestellt werden kann. Dabei können insbesondere Anzeigestifte, der Handhebel 36, eine Fernbedienung od. dgl. seitlich des Kupplungsautomaten 3 vorgesehen sein.

War die Zugöse beim Auslösen des Kupplungsautomaten 3 nicht in ihrer Sollposition und hat sich der Kupplungszapfen 2 in einer Vertiefung od. dgl. des Kupplungszapfens 2 verfangen, so kann sich die Zugöse nicht relativ zur Kupplung bewegen und der Kupplungsvorgang nicht erfolgreich abgeschlossen werden. Mittels des Handhebels 36 kann die Möglichkeit geschaffen werden, den Kupplungszapfen 2 kurzzeitig anzuheben, wodurch die Zugöse freikommt, in die Sollposition gebracht werden kann und anschließend der Kupplungszapfen 2 durch die Öffnung der Zugöse hindurch geführt werden kann. Dabei erscheint die Verwendung des Luftzylinders 35 vorteilhaft.

Bei anderen Ausführungen kann auch ein hydraulischer Zylinder vorgesehen sein.

Zur Erhöhung der Zuverlässigkeit des Kuppelvorgangs bei unterschiedlich großen Zugösen und/oder zur Erhöhung der Lebensdauer der Kupplung wird - in Gebrauchslage gesehen - an der Oberseite 17 des Aufnahmeraumes 11 des Kupplungsmauls 1 und/oder an der Unterseite 18 des Aufnahmeraumes 11 eine, vorzugsweise pilzförmige, Sattelbuchse 6 angeordnet sein, wobei die Sattelbuchse 6 lösbar mit dem Kupplungsmaul 1 verbunden ist und zumindest teilweise in den Aufnahmeraum 11 ragt.

Durch das Vorsehen von zwei Sattelbuchsen 6 kann die Kupplung in verschiedenen Lagen montiert werden, wobei einmal der Kupplungsautomat 3 oben und einmal unten angeordnet ist.

Die Oberseite 17 ist die dem Kupplungsautomaten benachbarte Seite. Diese kann im eingebauten Zustand oben oder auch unten zu liegen kommen. Dabei ist an der dem Kupplungsautomaten 3 benachbarten Oberseite 17 eines Aufnahmeraumes 11 des Kupplungsmauls 1 eine, vorzugsweise pilzförmige, Sattelbuchse 6 angeordnet ist, wobei die Sattelbuchse 6 lösbar mit dem Kupplungsmaul 1 verbunden ist und zumindest teilweise in den Aufnahmeraum 11 ragt. Durch das Vorsehen der Sattelbuchse 6 an der Oberseite 17 können Stöße der Zugöse gegen die Oberseite 17 von der Sattelbuchse 6 aufgenommen werden, wobei die Sattelbuchse 6 bei einer Wartung und/oder Instandhaltung gegebenenfalls ausgetauscht werden kann. Dadurch kann eine hohe Lebensdauer der Kupplung sichergestellt werden.

Mit der Sattelbuchse 6 kann der Aufnahmeraum 11 einfach an verschiedene Größen von Zugösen adaptiert werden, wobei durch die Anpassung der Größe des Aufnahmeraumes 11 an verschiedene Größen von Zugösen, die Zuverlässigkeit, dass die Zugöse bei der Auslösung des Kuppelautomaten 3 in der Sollposition ist, erhöht wird. Mit der Sattelbuchse 6 kann der Aufnahmeraum 11 an unterschiedlich hohe Zugösen angepasst werden.

Eine besonders einfache Ausgestaltung der erfindungsgemäßen Kupplung ergibt sich, wenn der Kupplungszapfen 2 in der Sattelbuchse 6 geführt ist. Dadurch können die Führung des Kupplungszapfens 2 und die Sattelbuchse 6 einstückig als Verschleißteil ausgebildet werden, wodurch die Anzahl der erforderlichen Teile gering gehalten werden kann.

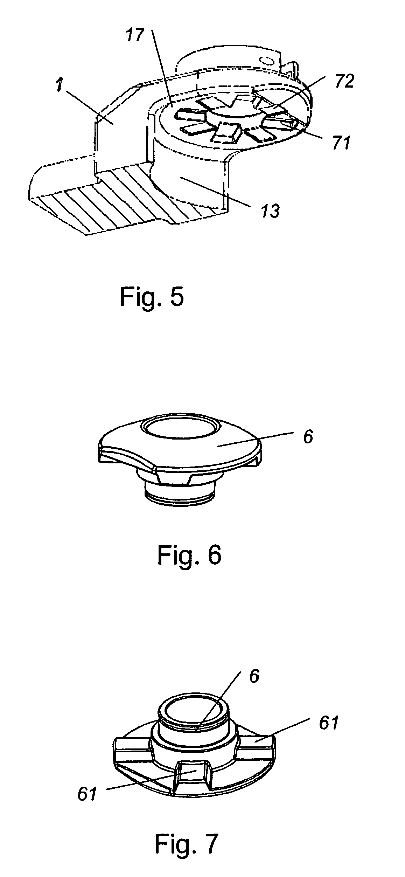

In den Fig. 6 und 7 ist eine Ausführungsform der Sattelbuchse 6 dargestellt, die Noppen 61 aufweist. Eine derartige Sattelbuchse 6 ist insbesondere für das Zusammenwirken mit einem Kupplungsmaul 1 vorgesehen, das eine erste Gruppe von Vertiefungen 71 und eine zweite Gruppe von Vertiefungen 72 aufweist. In Fig. 5 ist ein Teil einer Ausführungsform eines derartigen Kupplungsmaules gezeigt. Dabei ist die Sattelbuchse 6 in einer ersten Position und in einer zweiten Position verrastbar, wobei die Noppen 61 in der ersten Position mit der ersten Gruppe von Vertiefungen 71 und in der zweiten Position mit der zweiten Gruppe von Vertiefungen 72 in Eingriff sind.

Eine einfache Handhabung der Sattelbuchse 6 kann erreicht werden, wenn die Sattelbuchse 6 mittels einer Feder vorgespannt ist. Weist die Sattelbuchse 6 seitliche Einkerbungen auf, so kann sie mittels eines einfachen Werkzeuges, insbesondere eines Gabelschlüssels, von der ersten Position in die zweite Position oder von der zweiten Position in die erste Position verbracht werden.

Bei anderen Ausführungsformen können auch mehr als zwei Gruppen von Vertiefungen 71, 72 vorgesehen sein.

Bei der erfindungsgemäßen Kupplung können das Konturanpassungselement 4, das Feder-Dämpferelement 5 und die Sattelbuchse 6 als Verschleißteile ausgebildet sein. Diese können eine geringere Festigkeit als das Kupplungsmaul 1 und/oder die Zugöse aufweisen, wodurch die Abnützung des Kupplungsmauls 1 und/oder der Zugöse gering gehalten werden können und eine große Lebensdauer und Zuverlässigkeit erreicht wird. Das Konturanpassungselement 4, das Feder-Dämpferelement 5 und die Sattelbuchse 6 können bei Bedarf einfach und schnell ausgetauscht werden, weisen eine einfache Geometrie auf und sind einfach und kostengünstig herstellbar.

## Patentansprüche

1. Kupplung mit einem Kupplungsmaul (1) und einem Kupplungszapfen (2), wobei der Kupplungszapfen (2) mittels eines Kupplungsautomaten (3) betätigbar ist, wobei - in Gebrauchslage gesehen - an der Oberseite (17) eines Aufnahmeraumes (11) des Kupplungsmauls (1) und/oder an der Unterseite (18) des Aufnahmeraumes (11) eine, vorzugsweise pilzförmige, Sattelbuchse (6) zum Anpassen des Kupplungsmauls (1) und des Aufnahmeraumes (11) an verschiedene Größen von Zugösen sowie an unterschiedlich hohe Zugösen derart angeordnet ist, dass durch die Anpassung der Größe des Aufnahmeraumes (11) an verschiedene Größen von Zugösen sowie an unterschiedlich hohe Zugösen, die Zuverlässigkeit, dass die Zugöse bei der Auslösung des Kupplungsautomaten (3) in der Sollposition ist, hoch ist, wobei die Sattelbuchse (6) lösbar mit dem Kupplungsmaul (1) verbunden ist und zumindest teilweise in den Aufnahmeraum (11) ragt, **dadurch gekennzeichnet, dass** die Sattelbuchse (6) Noppen (61) aufweist und in einer ersten Position und einer zweiten Position verrastbar ist, wobei die Noppen (61) in der ersten Position mit einer ersten Gruppe von Vertiefungen (71) und in der zweiten Position mit einer zweiten Gruppe von Vertiefungen (72) in Eingriff sind.

2. Kupplung nach Anspruch 2, **dadurch gekennzeichnet, dass** der Kupplungszapfen (2) in der Sattelbuchse (6) geführt ist.

## Claims

1. A hitch, comprising a coupling jaw (1) and a coupling pin (2), with the coupling pin (2) being actuatable by means of an automatic hitch (3), with a preferably mushroom-shaped cradle bush (6) being arranged on the upper side (17) of a receiving space (11) of the coupling jaw (1) and/or on the bottom side (18) of the receiving space (11) - as seen in the operating position - for adjusting the coupling jaw (1) and the receiving space (11) to different sizes of drawbar eyes and differently high drawbar eyes in such a way that by adjusting the size of the receiving space (11) to different sizes of drawbar eyes and differently high drawbar eyes the reliability is very high that the drawbar eye is in the intended position upon tripping of the automatic hitch (3), with the cradle bush (6) being detachably connected with the coupling jaw (1) and protruding at least partly into the receiving space (11), **characterized in that** the cradle bush (6) comprises knobs (61) and can be latched in a first position and a second position, with the knobs (61) being in engagement in a first position with a first group of depressions (71) and in the second position with a second group of depressions (72).

2. A hitch according to claim 2, **characterized in that** the coupling pin (2) is guided in the cradle bush (6).

## Revendications

1. Attelage avec une chape d'attelage (1) et un pivot d'attelage (2), dans lequel le pivot d'attelage (2) peut être actionné au moyen d'un automatisme d'attelage (3), dans lequel, vu dans la position d'utilisation, il est prévu sur la face supérieure (17) d'un réceptacle (11) de la chape d'attelage (1) et/ou sur la face inférieure (18) du réceptacle (11) une douille de blocage (6) de préférence en forme de champignon pour l'adaptation de la chape d'attelage (1) et du réceptacle (11) à différentes tailles d'anneaux d'attelage et à différentes hauteurs d'anneau d'attelage, de telle manière que l'adaptation de la taille du réceptacle (11) à différentes tailles d'anneaux d'attelage et à différentes hauteurs de l'anneau d'attelage permette d'obtenir l'assurance que l'anneau d'attelage se trouve dans la position nominale lors du déclenchement de l'automatisme d'attelage (3), la douille de blocage (6) étant reliée de façon amovible avec la chape d'attelage (1) et dépassant au moins partiellement dans le réceptacle (11), **caractérisé en ce que** la douille de blocage (6) présente des tétons (61) et peut être emboîtée dans une première position et dans une deuxième position, les tétons (61) étant en prise avec un premier groupe de creux (71) dans la première position et avec un deuxième groupe de creux (72) dans la deuxième position.

2. Attelage selon la revendication 2, **caractérisé en ce que** le pivot d'attelage (2) est guidé dans la douille de blocage (6).
